# EUROPEAN PATENT SPECIFICATION

(11) **EP 1 678 016 B1**
(45) Date of publication and mention of the grant of the patent: **10.08.2011**
(21) Application number: 04793679.4
(22) Date of filing: 27.10.2004
(51) Int. Cl.: B60R 99/00

(54) **DEVICE FOR AVOIDING TRAFFIC ACCIDENTS WHERE AT LEAST ONE MOTOR VEHICLE IS INVOLVED**
VORRICHTUNG ZUR VERHINDERUNG VON VERKEHRSUNFÄLLEN, AN DENEN MINDESTENS EIN KRAFTFAHRZEUG BETEILIGT IST
DISPOSITIF DESTINE A EVITER DES ACCIDENTS DE LA ROUTE IMPLIQUANT AU MOINS UN VEHICULE A MOTEUR

(30) Priority: 27.10.2003 NL 1024632
(43) Date of publication of application: 12.07.2006
(73) Proprietor: Intertruck Benelux B.V., 3194 DH Hoogvliet, Roterdam (NL)
(72) Inventor: TON, Freek, NL-3312 JN Dordrecht (NL)
(74) Representative: van Westenbrugge, Andries
(86) International application number: PCT/NL2004/000755
(87) International publication number: WO 2005/039939

(56) References cited:
- WO-A-01/49517
- WO-A-03/082639
- US-A- 4 779 095
- US-A- 5 210 521
- US-A- 5 250 945
- US-B1- 6 264 337
- US-B1- 6 408 237

## Description

The invention relates to vehicle with four or more wheels provided with a device for avoiding traffic accidents where the vehicle and other type of road user are involved according to claim 1.

### State of the art

American patent US-A-4,779,095 discloses a device for avoiding traffic accidents provided with proximity sensors at the side of the vehicle, based on an image change detection system. Subsequent images in time of an area to be monitored are compared pixelwise, and when the difference cross a threshold, an alarm is generated.

International patent application WO03/082639 discloses a collision detection system, in which a fornt side of a vehicle is provided with pressure sensors to detect an actual collision with a pedestrian.

International patent application WO01/49517 discloses a safety system for protecting a door area outside a vehicle, based on the use of IR movement detection sensors.

Many traffic accidents where, on the one hand, a motor vehicle, in particular a commercial vehicle, and, on the other hand, another road user, in particular a cyclist or pedestrian, are involved occur frequently. The driver of a motor vehicle has a view of the traffic in front of the motor vehicle and the traffic alongside the driver's cab via the windows of the cab. So as also to gain an impression of the traffic behind the motor vehicle, one or more mirrors are fitted. These are the rear view mirror that provides the driver with a view to the rear through the motor vehicle via the rear window and/or the side mirrors that provide the driver with a view to the rear along the motor vehicle. In many cases, however, a cyclist or pedestrian who is a short distance away from a motor vehicle is not detected by the motor vehicle driver because the mirrors make only a portion of the immediate surroundings of the motor vehicle visible to the driver. Especially in situations where the motor vehicle starts to make a right turn, dangerous situations can arise with this arrangement if there is a cyclist or pedestrian alongside the side of the motor vehicle. The cyclist or pedestrian can end up under the wheels of the motor vehicle.

In order to reduce the risk of such accidents safety guards are being fitted on an increasing number of motor vehicles by means of which the space between the wheels is closed off in such a way that a pedestrian or cyclist is pushed away by such a guard and it is thus more difficult for such a pedestrian or cyclist to end up under the wheels. Such guards are described, for example, in GB 2 142 595 and DE 196 44 220.

Although a reduction in the number of accidents has already been achieved by this means, the risk of an accident is still not precluded. A pedestrian or other road user who is pushed away by a safety guard on a motor vehicle that is turning has only a short time in which to react. The risk of the road user falling and consequently still ending up under the wheels of the motor vehicle or coming into hard contact with the motor vehicle in some other way is not hypothetical. The risk of bodily injury or material damage still exists.

The use of the so-called "blind spot" mirror is also known. This mirror is fitted (usually in addition to the mirrors already present) in such a way that, via this mirror, the driver has a better view of the area immediately alongside the cab and alongside the side of the motor vehicle, where cyclists or pedestrians can be present. Such a mirror is, for example, disclosed in JP2002178832.

A reduction in the number of accidents has also been achieved by this means. When driving round a bend such a mirror has the drawback that the driver, who has to pay attention to taking the bend, also still has to look regularly in the blind spot mirror. The driver thus has to divide his or her attention, which is undesirable. Especially in the case of commercial vehicles consisting of a combination of tractor and trailer, such a mirror functions only moderately well. In this case the blind spot mirrors does make the side of the tractor visible to the driver, but not the side of the trailer. After all, when driving round a bend the tractor takes up an angled position relative to the trailer, as a result of which the mirror is not able to perform its function properly.

Consideration has also been given to the use of one or more cameras that record images of those regions alongside the motor vehicle that are not directly visible to the driver. These images are then displayed on a monitor that has been fitted in the cab of the motor vehicle or the tractor. Such solutions are described, for example, in JP200180375 and JP10236228.

A first disadvantage of cameras is that, as in the case of the blind spot mirror, it is not possible to make the entire region in the immediate vicinity of the motor vehicle visible to the driver under all circumstances. A further disadvantage is that the driver not only has to look around and has to pay attention to the traffic that is immediately visible and has to look in the.mirrors for any road users who are not immediately visible, but also has to pay attention to the monitor. As a result of the enforced dividing of attention, there is once again a risk of accidents, so that the advantages of the camera are at least partially eliminated.

Combinations of one or more of the measures described above have also not yet led to the dramatic reduction in the number of accidents that is sought. Combinations of mirrors and cameras can be found, for example, in DE 100 61 781.

### The invention

The aim of the invention is to reduce the risk of accidents in traffic situations where a driver of a motor vehicle, in particular a commercial vehicle and even more particularly a combination of tractor and trailer, has to manoeuvre his or her motor vehicle in the immediate vicinity of other road users, in particular pedestrians and users of two-wheeled vehicles, such as, more particularly, bicycles and mopeds.

According to the present invention this aim is achieved by a vehicle as described in claim 1

The use of sensors has the advantage that the driver can give his or her undivided attention to the traffic that is immediately visible through the cab windows. As soon as an object for example in the form of another road user comes within the strip in which the sensors are active, an alarm sounding device is activated, as a result of which the driver can take suitable measures. According to the present invention, one of the proximity sensors is constructed as a pressure sensor, by means of which the presence of an object that is pressing against the side of the motor vehicle (and thus is zero distance away from the side) can be detected. As soon as a light pressure is exerted on the sensor by another road user, an alarm signal is generated in the cab. As a result, the driver's attention is drawn to the presence of the other road user and he or she can then take appropriate measures, for example to brake and stop the motor vehicle. The invention comprises not only the use of one or more pressure sensors, but also at least one further sensor that is sensitive to radiation, in particular infrared radiation, and/or sensitive to electromagnetic waves, in particular in the radar frequencies, by means of which the presence of a road user in the vicinity of a side of the vehicle can be detected. The combination of different types of sensors makes the device more reliable and enables prevention of hazardous situations in multiple circumstances, before an actual accident happens.

It is preferable that a pressure sensor is fitted on both sides of the motor vehicle. Although in general there is less risk of accidents when turning left, it is nevertheless useful to install a sensor here as well.

It will be clear that the above considerations apply to countries where traffic drives on the right. For countries where traffic drives on the left, such as England, Australia, South Africa, the terms right and left must of course be interchanged. However, it will be clear that installing sensors on both sides of the motor vehicle is certainly a major advantage for motor vehicles travelling both in countries where traffic drives on the right and in countries where traffic drives on the left.

Pressure sensors exist in various embodiments. A very simple embodiment consists of a simple switch. In order to achieve adequate protection it is preferable that the pressure sensor is pressure-sensitive over an elongated surface. More particularly, it is preferable that the sensor is pressure-sensitive over virtually the entire length of the side concerned. Sensors that are pressure-sensitive over a large surface area are known per se.

Not all road users are the same size. The height at which the sensor is fitted on/in the side of the motor vehicle must preferably be so chosen that a signal is emitted both in the case of large and in the case of small road users if these come into contact with the side of the motor vehicle. It is then also important that the sensor is a predetermined height above the road.

More certainty can be obtained if a number of sensors are installed, each at a different height above the road.

The invention can advantageously be used in combination with other measures already known per se. In a preferred embodiment the invention is used with a motor vehicle that is provided with a safety guard on one side in/by the space between the wheels, wherein at least one of the sensors or a part thereof is mounted on the guard.

In order to facilitate the fitting of a device according to the invention it is preferable that the link between the pressure sensor and the alarm sounding device is a wireless communication link. By this means it is thus not necessary to lay run wired links, which is a major advantage especially in the case of tractor/trailer combinations.

### Designation of the figures

The invention will be explained in more detail below with reference to the appended figures.
Figure 1 shows, diagrammatically, a plan view of the potentially dangerous situation that can arise if a motor vehicle wants to make a turn while there is another road user in the immediate vicinity of the motor vehicle.
Figure 2 shows, diagrammatically, a side view of a first very simple embodiment of a device according to the invention used with a small type of commercial vehicle.
Figure 3 shows, diagrammatically, a side view of a second, improved embodiment of a device according to the invention used with a small type of commercial vehicle.
Figure 4 shows, diagrammatically, a side view of a third embodiment of a device according to the invention used with a tractor/trailer combination.
Figure 5 shows, diagrammatically, a side view of a fourth embodiment of a device according to the invention used with a tractor/trailer combination that is also provided with a safety guard.
Figure 6 shows, diagrammatically, a fifth embodiment of a device according to the invention used with a tractor/trailer combination that is provided with an adapted safety guard.
Figure 7 shows a block diagram of the circuits for processing the sensor signals.

### Detailed description

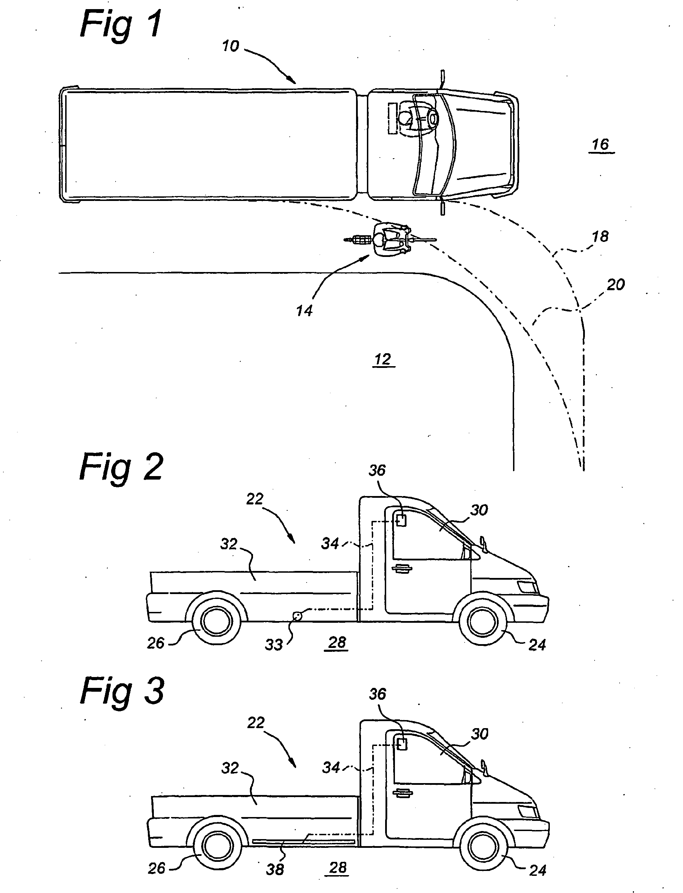

Figure 1 shows, diagrammatically, a plan view of the potentially dangerous situation that can arise if a motor vehicle wants to turn right while there is another road user in the immediate vicinity of the motor vehicle. The motor vehicle is indicated in general by 10. There is a cyclist 14 between the motor vehicle 10 and the pavement 12. Both the motor vehicle 10 and the cyclist 14 are on the road 16. When the motor vehicle turns right the front wheels of the motor vehicle will follow the path indicated by the broken line 18. The rear wheels of the motor vehicle, on the other hand, will follow the path 20 which differs therefrom. As can be seen in the figure, the risk that the motor vehicle collides with the cyclist when turning is not hypothetical.

In order to avoid such collisions the invention now provides a device, a first very simple embodiment of which is shown diagrammatically in Figure 2. In this figure a small type of commercial vehicle is indicated in general by 22. The motor vehicle is provided with front wheels 24 and rear wheels 26, there being an open space 28 between the front wheels and rear wheels, in particular behind the cab 30 and below the loading platform 32 of the motor vehicle 22. It has been found that in the case of accidents the pedestrian or cyclist involved frequently ends up in this space and is run over by the rear wheels of the motor vehicle. According to the invention a pressure-sensitive sensor 33 is now mounted in the vicinity of this space, in or on the side of the motor vehicle 22. This sensor 33 is linked to an alarm sounding device 36 via a link 34 indicated by a broken line. The alarm sounding device is positioned in the cab 30 of the motor vehicle 22 and if the sensor 33 is activated can, for example, emit an acoustic signal or other type of signal to warn the driver.

If the sensor is activated because another road user comes into contact with the side of the motor vehicle, the driver is then made aware by means of the signal from the alarm sounding device 36 of the situation that has arisen, so that he or she can react by, for example, stepping on the brake to bring the motor vehicle to a stop. It will be clear that, if necessary, there will be a circuit between the sensor 33 and the alarm sounding device 36 by means of which the detection signal from the sensor 33 is converted into a control signal for the alarm sounding device 36. This circuit, which, for example, can be combined with the alarm sounding device, is not shown separately in the figure.

Only a small part of the side of the motor vehicle can be monitored by a single sensor. Although this can already produce good results with a small type of motor vehicle, it is preferable to monitor the side of the motor vehicle over a greater length. Therefore, in Figure 3 a second embodiment of the device according to the invention is shown diagrammatically, in which the same motor vehicle as in Figure 2 is now provided with an elongated sensor 38. Sensors that are pressure-sensitive over a large surface area, for example an elongated surface, are known per se and are commercially available and therefore require no more detailed explanation. In Figure 3 the sensor 38 has a length such that the entire top boundary of the gap 28 is monitored.

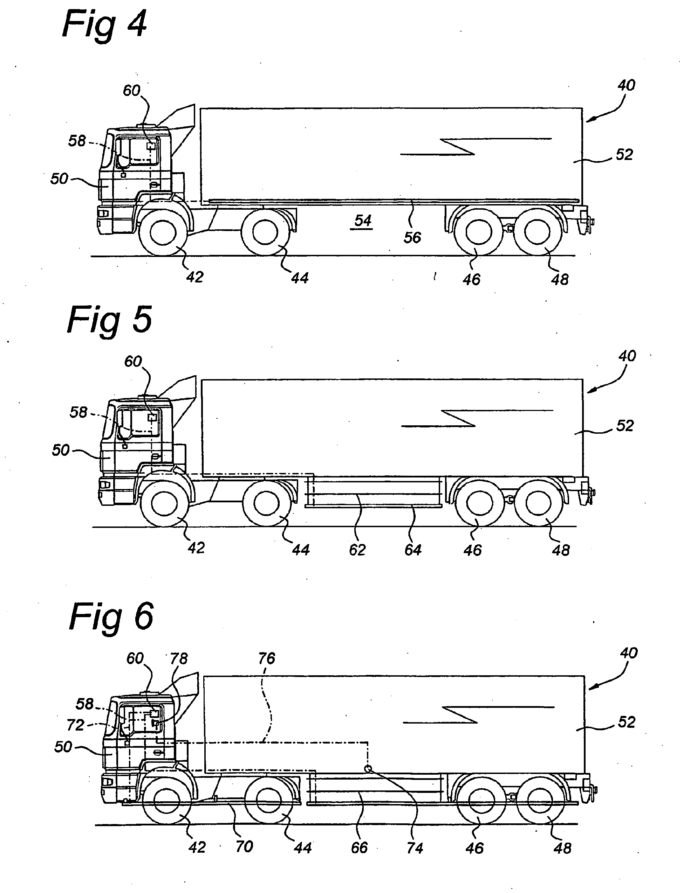

Figure 4 shows the application of the invention with a tractor/trailer combination that is indicated in general by 40. The tractor 50 runs on the wheels 42 and 43, whilst the front of the trailer 52 bears on the tractor 50 and the rear of the trailer 52 runs on a set of wheels 46/48. The space 54 to be protected is located between the wheels 44 and 46. Above this space 54 an elongated sensor 56 is mounted against the side of the trailer 52. This sensor 56 is linked to the alarm sounding device 60 via the link 58. As indicated, the sensor preferably has a length such that it also extends above the wheels 46 and 48 of the trailer 52. The immediate surroundings of these wheels also constitute a potentially dangerous place for a pedestrian or cyclist.

The device according to the invention can advantageously be used in combination with other protection methods, such as, for example, in combination with a safety guard. One example of this is shown in Figure 5. The same combination 40 of tractor 50 and trailer 52 as shown in Figure 4 is now provided with a safety guard 62. The elongated pressure-sensitive sensor 64 according to the invention is mounted on one of the horizontal parts of the guard 62. The advantage of this embodiment is that the sensor is now at a height above the road surface that better corresponds to the height of smaller road users such as children.

An improvement in this embodiment can be achieved by installing several sensors, each at a different height above the road surface. In the example in Figure 5, where a safety guard with three horizontal elements has been fitted, a sensor could be installed on each of these elements. All these sensors are then connected in parallel (via a suitable circuit) to the alarm sounding device 60. The alarm sounding device is actuated on activation of at least one sensor. The detection sensitivity of the device in the height direction increases by this means.

Compared with the embodiment in Figure 4, the embodiment in Figure 5 has the disadvantage that it is not the entire length of the trailer that is monitored but only that part that corresponds to the length of the guard 62. This disadvantage could be eliminated by installing a further sensor on the side of the trailer in the manner as shown in Figure 4. However, this disadvantage can also be eliminated by extending at least one of the horizontal parts of the guard 62 in such a way that this part extends over (virtually) the entire length of the trailer 52. An example of such an embodiment is shown diagrammatically in Figure 6.

In Figure 6 the same combination 40 of tractor 50 and trailer 52 is shown, but now provided with a modified safety guard 66, one of the horizontal parts of which (in particular the bottom horizontal part) extends past the wheels 46 and 48 as far as a point near the rear of the trailer 52. In accordance with the invention an elongated sensor 68 is attached to this extended horizontal part. The sensor 68 has approximately the same length as the extended horizontal part. As a result the detection field of the sensor 66 extends over virtually the entire length of the trailer 52. Optionally all horizontal parts of the guard 66 can be extended in a similar way beyond the wheels 46 and 48 as far as a point near the rear of the trailer 52, it being possible for an elongated pressure-sensitive sensor to be installed on each of these extended parts. As a result the detection field of the device is increased not only in the longitudinal direction but also in the height direction.

It will be clear that in Figures 5 and 6 further sensors can optionally also be mounted on the side of the trailer itself, in addition to the sensor(s) on the safety guard. Furthermore, for all embodiments one or more sensors can also be installed on the cab of the motor vehicle. As an example of this in Figure 6 a further pressure-sensitive elongated sensor 70 is installed on the side of the tractor 50. If the bodywork of the motor vehicle is suitable for this the sensor can then be mounted directly thereon. In the example shown, however, it will be necessary to fit a suitable support element beneath the cab 50 and past the wheels 42 and 44, which support element can then serve as support for the sensor 70. The sensor 70 is connected to the alarm sounding device 60 via a further link 72. As can be seen in the figure, virtually the entire side of the tractor/trailer combination 40 is protected with the aid of the two sensors 66 and 70.

As an example of a further sensor by means of which radiation in some form or other is detected, a passive infrared sensor can be mounted in or on the side of a motor vehicle. This sensor emits a signal to a signal-processing circuit that is set such that an actuating signal is transmitted to the alarm sounding device only if an object irradiating infrared, such as a pedestrian or cyclist or another road user, is a very short distance away from the sensor. In order to prevent false alarms as far as possible, the said distance is, for example, set to a maximum of 10 or 15 cm. Passive infrared sensors are known per se and are commercially available. In order to achieve a large detection region a number of sensors can be positioned next to one another in an elongated configuration or an elongated strip consisting of or provided with infrared-sensitive material can be used. Such a sensor can be used in the same way as has been shown for a pressure-sensitive sensor with the aid of Figures 2-6.

Another example of a further sensor is an active sensor that operates with high frequency electromagnetic radiation, such as a radar transmitter/receiver combination. Such sensors are also known per se and are commercially available. This sensor emits a signal to a signal-processing circuit that is set such that an activation signal is transmitted to the alarm sounding device only if a reflecting object, such as a pedestrian or cyclist or another obstacle, is a very short distance away from the sensor. In order to prevent false alarms as far as possible, the said distance is, for example, set to at most 10 or 15 cm. In order to achieve a large detection region a number of sensors can be positioned alongside one another in an elongated configuration. Such a sensor can be used in the same way as has been shown for a pressure-sensitive sensor with the aid of Figures 2-6.

Within the framework of the invention, further sensors, for example one or more acoustic sensors by means of which sounds from the surroundings are detected, are used in combination with a proximity sensor. As an example, in Figure 6 a microphone 74 is mounted on or in the side of the trailer. Via a link 76, this microphone 74 emits a signal to a processing circuit (not shown separately in the figure) that filters the background noise from this signal and allows only strong signal components through to a loudspeaker 78 mounted in the cab. As a result, for example, shouts by other road users can be made audible to the driver whilst there is no reaction to normal traffic noise. Because this acoustic sensor essentially has to operate under conditions in which the motor vehicle is stationary or moving forwards slowly, it is preferable to add a speed-dependent signal to the processing circuit, by means of which the acoustic sensor is activated only at speeds below a specific speed. Such a speed-dependent signal is already available in the majority of motor vehicles.

According to the invention a combination of sensors, such as one or more pressure-sensitive sensors in combination with at least one further sensor is installed means of which the presence of another road user or, optionally an obstacle a very short distance away from the side of the motor vehicle can be detected. Examples thereof have been mentioned above.

The proximity sensor is used to emit a signal that serves as a warning to the driver that a possibly dangerous situation exists. If the alarm sounding device is actuated by the pressure sensor this means that an immediate response is required on the part of the driver, such as braking sharply and bringing the motor vehicle to a stop. In order to be able to distinguish between a warning by a signal from a proximity sensor and a genuine alarm by a signal from the pressure sensor, it is preferable that the alarm sounding device is able to emit two different, respective signals, or that two different alarm sounding devices are used.

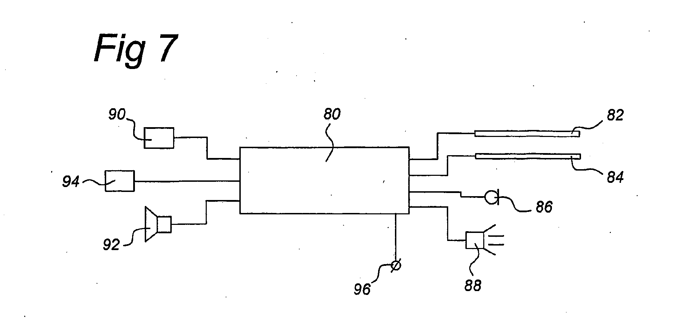

The diagram showing the principle of a circuit by means of which the signals from one or more of the sensors can be processed is shown in Figure 7. The circuit itself is indicated by 80. As an example two pressure-sensitive sensors 82 and 84, an acoustic sensor 86 and a radar sensor 88 are connected to the inputs of this circuit 80. The signals from these sensors are processed by the circuit 90 and, if there is a reason for this, either the loudspeaker 92 or one of the alarm sounding devices 90 or 94 is activated. Via the loudspeaker 92 the driver's attention is drawn to the fact that there are other road users in the immediate vicinity of the motor vehicle. In this case the sensor signal concerned is supplied by the microphone 86. The situation does not have to be dangerous, but additional attention is certainly desirable in that case. If the driver is warned by means of the alarm sounding device 90, this also constitutes a warning of a possibly dangerous situation. Attention is desired in this case also. In this case the sensor signal concerned originates from the radar sensor 88. If, however, the alarm sounding device 94 is activated by a signal from one of the pressure sensors 82 or 84 (or both) and emits a clearly differentiated alarm, the driver has to take appropriate measures immediately, for example brake sharply and bring the motor vehicle to a stop.

As has already been indicated above, it is preferable to take account of the speed at which the vehicle is moving. Therefore, in Figure 7 a speed-dependent signal is added from a connection point 96 that is assumed to be present in the motor vehicle or can be implemented.

It will be clear that the alarm sounding devices 90 and 94 can be combined in one piece of equipment if this piece of equipment has the facility to generate two different alarms.

The links between the sensor(s) and the alarm sounding device(s) are indicated as broken lines in the various figures. These links can consist of wired links but also of wireless links. Because the installation according to the invention in many cases will be installed subsequently in a motor vehicle that is already in service, the use of wired links means that additional wires have to be run, which can be a more or less time-consuming job. In many cases it is then also preferable to make use of wireless communication between the sensor(s) and the processing circuit, which, in turn, controls the alarm sounding devices via fixed wired links. The wireless communication can be implemented in a simple manner by making use of transponder technology. In this case each of the sensors is linked to a transponder circuit and the processing circuit is provided with a send/receive circuit for transmitting polling signals and receiving the responses from the transponder circuits. The hardware required for the application of transponder technology is commercially available and therefore also requires no more detailed explanation. The transponder technology is advantageous especially in the case of tractors that travel with various trailers. The tractor can couple up a trailer without the need for wire connections. It is necessary only to adjust the transmitter/receiver in the tractor to the transponder(s) present in the trailer. There are various possibilities for this, which, however, will be known to a person skilled in the art and thus require no more detailed explanation.

It has been indicated above that the driver has to take appropriate measures if an alarm signal is given. It will be clear that the installation can also be so constructed that action is taken automatically. If the braking installation of the motor vehicle is suitable for this, or has been adapted for this purpose, the control unit 80 can then, for example, be linked to the braking installation in such a way that in the situation concerned not only the alarm sounding device 90 is activated but a signal is also sent to the braking installation, as a result of which this comes into operation and the motor vehicle begins to brake. It is assumed that this will also be clear to a person skilled in the art without illustration and a detailed description.

## Claims

1. Vehicle with four a more wheels device for avoiding traffic accidents where the vehicle (10) with four or more wheels and another type of road user (14) are involved and where said road user (14) comes into contact with at least part of a side of the vehicle (10), the device comprising means (80) by means of which the presence of another road user (14) in the vicinity of the side of the vehicle (10) can be established by the driver of the vehicle (10), in which said means (80) are provided with at least one proximity sensor (82,84,88) fixed in or on the relevant side of the vehicle (10) by means of which the presence of an object (14) within a strip of selectable width from the side of the vehicle can be detected, which at least one proximity sensor (82, 84, 88) is linked to an alarm sounding device (90) by means of which the driver can be alerted if the at least one proximity sensor (82,84,88) is activated, **characterised in that** the proximity sensor comprises a combination of a pressure sensor (82, 84) by means of which the presence of a road user or object (14) who/that is pressing against the side of the vehicle (10) can be detected and at least one further sensor (88) that is sensitive to radiation, in particular infrared radiation, and/or sensitive to electromagnetic waves, in particular in the radar frequencies, by means of which the presence of a road user (14) in the vicinity of a side of the vehicle (10) can be detected.

2. Vehicle according to Claim 1, **characterised in that** the vehicle (10) is constituted by a trailer that has to be pulled by a tractor in a known manner.

3. Vehicle according to Claim 1, **characterised in that** the vehicle (10) is constituted by the combination of a tractor and trailer coupled thereto.

4. Vehicle according to Claim 1, **characterised in that** the pressure sensor (82, 84) is pressure-sensitive over an elongated surface.

5. Vehicle according to Claim 4, **characterised in that** the sensor (82, 84) is pressure-sensitive over virtually the entire length of the side concerned.

6. Vehicle according to one of Claims 1-5, **characterised in that** the sensitivity of the at least one further sensor (88) is set such that an alarm is generated only in the case of detection of a road user or object (14) within a predetermined distance from the relevant side of the vehicle (10).

7. Vehicle according to one of the preceding claims, **characterised in that** the at least one proximity sensor (82, 84, 88) is at a predetermined height above the road.

8. Vehicle according to one of the preceding claims, **characterised in that** a number of proximity sensors (82, 84, 88) are installed, each at a different height above the road.

9. Vehicle according to one of the preceding claims, that is provided on one side with a safety guard (62) at a gap between the wheels, **characterised in that** the at least one proximity sensor(82, 84, 88) is installed on the guard (62).

10. Vehicle according to Claim 9, **characterised in that** at least one of the horizontal parts of the guard (62) extends past the rear wheels of the vehicle (10) and **in that** the at least one proximity sensor (82, 84, 88) is installed on this part and has a length that is virtually the same as that of the said part.

11. Vehicle according to one of the preceding claims, **characterised in that** the link between the proximity sensor or sensors (82, 84, 88) and the alarm sounding device (90, 94) is a wireless communication link.

12. Vehicle according to Claim 11, **characterised in that** transponder technology is used to implement the wireless communication link.

13. Vehicle according to any of the preceding Claims, **characterised in that** the alarm sounding device (90, 94) is able to sound various alarms depending on the fact as to whether it is actuated by the pressure sensor (82,84) or by the at least one further sensor (88).

14. Vehicle according to one of the preceding claims, **characterised in that** in addition to the at least one proximity sensor (82, 84) there is also an acoustic sensor (86) by means of which a signal that is audible to the driver can be generated under conditions that can be set.

## Patentansprüche

1. Fahrzeug mit vier oder mehr Rädern, umfassend eine Vorrichtung zur Vermeidung von Verkehrsunfällen, bei denen das Fahrzeug (10) mit vier oder mehr Rädern und eine andere Art von Straßenbenutzer (14) involviert sind und bei welchen der Straßenbenutzer (14) in Kontakt mit mindestens einem Teil einer Seite des Fahrzeugs (10) gerät, wobei die Vorrichtung Mittel (80) umfasst, mittels derer die Anwesenheit eines anderen Straßenbenutzers (14) in der Nähe der Seite des Fahrzeugs (10) vom Fahrer des Fahrzeugs (10) festgestellt werden kann, wobei die Mittel (80) ausgestattet sind mit mindestens einem Nähesensor (82, 84, 88), der in oder an der relevanten Seite des Fahrzeugs (10) fixiert ist, mittels dessen die Anwesenheit eines Objektes (14) innerhalb eines Streifens auswählbarer Breite von der Seite des Fahrzeugs detektiert werden kann, wobei der mindestens eine Nähesensor (82, 84, 88) mit einem akustischen Alarmgerät (90) verbunden ist, mittels dessen der Fahrer gewarnt werden kann, wenn der mindestens eine Nähesensor (82, 84, 88) aktiviert wird, **dadurch gekennzeichnet, dass** der Nähesensor eine Kombination eines Drucksensors (82, 84), mittels dessen die Anwesenheit eines Straßenbenutzers oder Objekts (14) welcher/welches gegen die Seite des Fahrzeugs (10) drückt, detektiert werden kann, und mindestens einem weiteren Sensors (88), welcher auf Strahlung sensitiv ist, insbesondere Infrarotstrahlung, und/oder sensitiv ist auf elektromagnetische Wellen, insbesondere innerhalb der Radarfrequenzen, mittels dessen die Anwesenheit eines Straßenbenutzers (14) in der Nähe einer Seite des Fahrzeugs (10) detektiert werden kann, umfasst.

2. Fahrzeug nach Anspruch 1, **dadurch gekennzeichnet, dass** das Fahrzeug (10) von einem Anhänger gebildet wird, welcher in bekannter Weise von einer Zugmaschine gezogen werden muss.

3. Fahrzeug nach Anspruch 1, **dadurch gekennzeichnet, dass** das Fahrzeug (10) gebildet wird durch die Kombination von einer Zugmaschine und eines daran gekoppelten Anhängers.

4. Fahrzeug nach Anspruch 1, **dadurch gekennzeichnet, dass** der Drucksensor (82, 84) über eine lang gestreckte Oberfläche drucksensitiv ist.

5. Fahrzeug nach Anspruch 4, **dadurch gekennzeichnet, dass** der Sensor (82, 84) drucksensitiv über praktisch die gesamte Länge der betroffenen Seite ist.

6. Fahrzeug nach einem der Ansprüche 1-5, **dadurch gekennzeichnet, dass** die Sensitivität des mindestens einen weiteren Sensors (88) derart eingestellt ist, dass ein Alarm nur generiert wird im Falle einer Detektion eines Straßenbenutzers oder Objekts (14) innerhalb eines vorgegebenen Abstandes von der relevanten Seite des Fahrzeugs (10).

7. Fahrzeug nach einem der vorhergehenden Ansprüche, **dadurch gekennzeichnet, dass** der mindestens eine Nähesensor (82, 84, 88) bei einer vorgegebenen Höhe oberhalb der Straße angeordnet ist.

8. Fahrzeug nach einem der vorhergehenden Ansprüche, **dadurch gekennzeichnet, dass** eine Anzahl von Nähesensoren (82, 84, 88) installiert sind, jeder an einer unterschiedlichen Höhe oberhalb der Straße.

9. Fahrzeug nach einem der vorhergehenden Ansprüche, welches an einer Seite mit einem Schutz (62) an einer Lücke zwischen den Rädern ausgestattet ist, **dadurch gekennzeichnet, dass** der mindestens eine Nähesensor (82, 84, 88) auf dem Schutz (62) installiert ist.

10. Fahrzeug nach Anspruch 9, **dadurch gekennzeichnet, dass** mindestens eines der horizontalen Teile des Schutzes (62) sich an den hinteren Rädern des Fahrzeugs (10) vorbei erstreckt und dass der mindestens eine Nähesensor (82, 84, 88) auf diesem Teil installiert ist und eine Länge aufweist, welche praktisch dieselbe ist wie die dieses Teils.

11. Fahrzeug nach einem der vorhergehenden Ansprüche, **dadurch gekennzeichnet, dass** die Verbindung zwischen dem Nähesensor oder den Nähesensoren (82, 84, 88) und dem akustischen Alarmgerät (90, 94) eine drahtlose Kommunikationsverbindung ist.

12. Fahrzeug nach Anspruch 11, **dadurch gekennzeichnet, dass** Transpondertechnologie eingesetzt wird, um die drahtlose Kommunikationsverbindung zu implementieren.

13. Fahrzeug nach einem der vorhergehenden Ansprüche, **dadurch gekennzeichnet, dass** das akustische Alarmgerät (90, 94) in der Lage ist, verschiedene Alarme ertönen zu lassen, abhängig davon, ob es von dem Drucksensor (82, 84) oder von dem mindestens einen weiteren Sensor (88) ausgelöst wird.

14. Fahrzeug nach einem der vorhergehenden Ansprüche, **dadurch gekennzeichnet, dass**, zusätzlich zu dem mindestens einen Nähesensor (82, 84) auch ein akustischer Sensor (86) vorgesehen ist, mittels dessen ein für den Fahrer hörbares Signal gesetzt werden kann, unter Bedingungen, welche eingestellt werden können.

## Revendications

1. Véhicule avec quatre roues ou plus pourvu d'un dispositif destiné à éviter les accidents de la route, dans lequel le véhicule (10) avec quatre roues ou plus et un autre type d'usager de la route (14) sont impliqués et dans lequel ledit usager de la route (14) entre en contact avec au moins une partie d'un côté du véhicule (10), le dispositif comprenant des moyens (80) au moyen desquels la présence d'un autre usager de la route (14) au voisinage du côté du véhicule (10) peut être établie par le conducteur du véhicule (10), dans lequel lesdits moyens (80) sont dotés d'au moins un détecteur de proximité (82, 84, 88) fixé dans ou sur le côté concerné du véhicule (10) au moyen duquel la présence d'un objet (14) dans une bande dont la largeur peut être sélectionnée depuis le côté du véhicule peut être détectée, au moins un détecteur de proximité (82, 84, 88) étant relié à un dispositif d'alarme sonore (90) au moyen duquel le conducteur peut être alerté si le au moins un détecteur de proximité (82, 84, 88) est activé, **caractérisé en ce que** le détecteur de proximité comprend une combinaison d'un détecteur de pression (82, 84) au moyen duquel la présence d'un usager de la route ou d'un objet (14) pressant contre le côté du véhicule (10) peut être détectée et au moins un autre détecteur (88) sensible au rayonnement, notamment au rayonnement infrarouge, et/ou sensible aux ondes électromagnétiques, notamment dans les fréquences radar, au moyen duquel la présence d'un usager de la route (14) au voisinage d'un côté du véhicule (10) peut être détectée.

2. Véhicule selon la revendication 1, **caractérisé en ce que** le véhicule (10) est constitué d'une remorque devant être tirée par un tracteur de manière connue.

3. Véhicule selon la revendication 1, **caractérisé en ce que** le véhicule (10) est constitué de la combinaison d'un tracteur et d'une remorque couplée à celui-ci.

4. Véhicule selon la revendication 1, **caractérisé en ce que** le détecteur de pression (82, 84) est sensible à la pression sur une surface allongée.

5. Véhicule selon la revendication 4, **caractérisé en ce que** le détecteur (82, 84) est sensible à la pression sur pratiquement toute la longueur du côté concerné.

6. Véhicule selon l'une des revendications 1 à 5, **caractérisé en ce que** la sensibilité du au moins un autre détecteur (88) est réglée de manière à ce qu'une alarme soit générée uniquement en cas de détection d'un usager de la route ou d'un objet (14) situé à moins d'une distance prédéterminée du côté concerné du véhicule (10).

7. Véhicule selon l'une des revendications précédentes, **caractérisé en ce que** le au moins un détecteur de proximité (82, 84, 88) se situe à une hauteur prédéterminée au-dessus de la route.

8. Véhicule selon l'une des revendications précédentes, **caractérisé en ce qu'**un nombre de détecteurs de proximité (82, 84, 88) est installé, chacun à une hauteur différente au-dessus de la route.

9. Véhicule selon l'une des revendications précédentes, doté sur un côté d'un dispositif de protection (62) au niveau d'un espace entre les roues, **caractérisé en ce que** le au moins un détecteur de proximité (82, 84, 88) est installé sur le dispositif de protection (62).

10. Véhicule selon la revendication 9, **caractérisé en ce qu'**au moins l'une des parties horizontales du dispositif de protection (62) s'étend derrière les roues arrière du véhicule (10) et le au moins un détecteur de proximité (82, 84, 88) est installé sur cette partie et présente une longueur qui est pratiquement la même que celle de ladite partie.

11. Véhicule selon l'une des revendications précédentes, **caractérisé en ce que** la liaison entre le détecteur ou les détecteurs de proximité (82, 84, 88) et le dispositif d'alarme sonore (90, 94) est une liaison de communication sans fil.

12. Véhicule selon la revendication 11, **caractérisé en ce qu'**une technologie de transpondeur est utilisée pour mettre en place la liaison de communication sans fil.

13. Véhicule selon l'une quelconque des revendications précédentes, **caractérisé en ce que** le dispositif d'alarme sonore (90, 94) est capable d'émettre différentes alarmes en fonction de s'il est actionné par le détecteur de pression (82, 84) ou par le au moins un autre détecteur (88).

14. Véhicule selon l'une des revendications précédentes, **caractérisé en ce qu'**en plus du au moins un détecteur de proximité (82, 84), il y a également un détecteur acoustique (86) au moyen duquel un signal audible par le conducteur peut être généré dans des conditions qui peuvent être déterminées.
